(19) Europäisches Patentamt
European Patent Office
Office européen des brevets

(11) **EP 2 560 399 A1**

(12) **EUROPEAN PATENT APPLICATION**
published in accordance with Art. 153(4) EPC

(43) Date of publication:
**20.02.2013 Bulletin 2013/08**

(51) Int Cl.:
**H04N 13/04** *(2006.01)*

(21) Application number: **11768763.2**

(22) Date of filing: **06.04.2011**

(86) International application number:
**PCT/JP2011/058705**

(87) International publication number:
**WO 2011/129242 (20.10.2011 Gazette 2011/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.04.2010 JP 2010092815**

(71) Applicant: **Sony Corporation
Tokyo 108-0075 (JP)**

(72) Inventors:
• **USHIKI Suguru
Tokyo 108-0075 (JP)**

• **OGATA Masami
Tokyo 108-0075 (JP)**
• **MORIFUJI Takafumi
Tokyo 108-0075 (JP)**

(74) Representative: **Berryman, Robert Jan et al
D Young & Co LLP
120 Holborn
London EC1N 2DY (GB)**

(54) **DATA STRUCTURE, IMAGE PROCESSING APPARATUS, IMAGE PROCESSING METHOD, AND PROGRAM**

(57)    The present invention relates to data structures, image processing apparatuses, image processing methods, and programs for enabling appropriate processing of video data of 3D content.

Obtained content data of 3D content contains video data of 3D images, and information about a reference image size, which is a predetermined image size serving as the reference for the 3D images, and the maximum and minimum parallaxes for the reference image size. An image size detecting unit (71) detects the image size of the video data of the 3D images. If the detected image size of the 3D video data is not the same as the "reference image size," a maximum/minimum parallax calculating unit (72) calculates the maximum and minimum parallaxes corresponding to the image size of the 3D video data. A caption adjusting unit (73) performs predetermined image processing based on the calculated maximum and minimum parallaxes, such as processing to adjust the depth positions of captions. The present invention can be applied to an image processing apparatus that processes obtained image data of 3D images, for example.

FIG. 8

EP 2 560 399 A1

**Description**

TECHNICAL FIELD

The present invention relates to data structures, image processing apparatuses, image processing methods, and programs. Particularly, the present invention relates to a data structure, an image processing apparatus, an image processing method, and a program for enabling appropriate processing of video data of 3D content.

BACKGROUND ART

Although 2D images are the mainstream of content such as movies, attention is recently being drawn to 3D images, and various techniques have been suggested for 3D image display apparatuses and 3D image encoding and decoding methods (see Patent Documents 1 and 2, for example).

A 3D image is formed with an image for the left eye to be viewed with the left eye and an image for the right eye to be viewed with the right eye. As predetermined parallaxes are set for the image for the left eye and the image for the right eye, viewers see the image in three dimensions.

CITATION LIST

PATENT DOCUMENTS

Patent Document 1: Japanese Patent Application Laid-Open No. 10-327430
Patent Document 2: Japanese Patent Application Laid-Open No. 2008-182669

SUMMARY OF THE INVENTION

PROBLEMS TO BE SOLVED BY THE INVENTION

The information (parallax information) about the maximum value and the minimum value of parallaxes set for the image for the left eye and the image for the right eye of a 3D image can be detected from the provided images for the left eye and the right eye, but it is also possible to provide the information as metadata (additional information) for the 3D content. In that case, the information about the maximum and minimum values of parallaxes varies with image size. Therefore, appropriate processing cannot be performed, unless to what image size the parallax information corresponds is accurately recognized by the 3D content receiving side.

The present invention has been made in view of the above circumstances, and the object thereof is to enable appropriate processing of video data of 3D content.

SOLUTIONS TO PROBLEMS

A data structure according to a first aspect of the present invention includes: image data of a 3D image; and a reference image size that is a predetermined image size to be a reference for the 3D image, and maximum and minimum parallaxes for the reference image size.

In the first aspect of the present invention, a data structure includes image data of a 3D image, a reference image size that is a predetermined image size serving as the reference for the 3D image, and the maximum and minimum parallaxes for the reference image size.

An image processing apparatus according to a second aspect of the present invention includes: an obtaining unit that obtains image data of a 3D image, and content data containing a reference image size that is a predetermined image size to be a reference for the 3D image and maximum and minimum parallaxes for the reference image size; a detecting unit that detects an image size corresponding to the image data of the 3D image obtained by the obtaining unit; a parallax calculating unit that calculates maximum and minimum parallaxes corresponding to the image size of the obtained image data, when the detected image size of the image data is not the same as the reference image size; and a processing unit that performs predetermined image processing on the image data obtained by the obtaining unit, based on the calculated maximum and minimum parallaxes.

An image processing method according to the second aspect of the present invention includes the steps of: obtaining image data of a 3D image, and content data containing a reference image size that is a predetermined image size to be a reference for the 3D image and maximum and minimum parallaxes for the reference image size; detecting an image size corresponding to the obtained image data of the 3D image; calculating maximum and minimum parallaxes corresponding to the image size of the obtained image data, when the detected image size of the image data is not the same as the reference image size; and performing predetermined image processing on the obtained image data, based on the calculated maximum and minimum parallaxes.

A program according to the second aspect of the present invention causes a computer to perform an operation including the steps of: obtaining image data of a 3D image, and content data containing a reference image size that is a predetermined image size serving as the reference for the 3D image and the maximum and minimum parallaxes for the reference image size; detecting the image size corresponding to the obtained image data of the 3D image; calculating the maximum and minimum parallaxes corresponding to the image size of the obtained image data, when the detected image size of the image data is not the same as the reference image size; and performing predetermined image processing on the obtained image data, based on the calculated maximum and minimum parallaxes.

In the second aspect of the present invention, image data of a 3D image, and content data containing a reference image size that is a predetermined image size serving as the reference for the 3D image and the maximum and minimum parallaxes for the reference image size are obtained. The image size corresponding to the obtained image data of the 3D image is then detected. If the detected image size of the image data is not the same as the reference image size, the maximum and minimum parallaxes corresponding to the image size of the obtained image data are calculated. Based on the calculated maximum and minimum parallaxes, predetermined image processing is performed on the obtained image data.

A data structure according to a third aspect of the present invention includes: image data of a 3D image; and maximum and minimum parallaxes for an image size corresponding to the image data of the 3D image.

In the third aspect of the present invention, a data structure includes image data of a 3D image, and the maximum and minimum parallaxes for the image size corresponding to the image data of the 3D image.

An image processing apparatus according to a fourth aspect of the present invention includes: an obtaining unit that obtains image data of a 3D image, and content data containing maximum and minimum parallaxes for an image size corresponding to the image data of the 3D image; an enlarging/reducing unit that enlarges or reduces the image size corresponding to image data of the 3D image obtained by the obtaining unit, the image size being enlarged or reduced at a predetermined enlargement or reduction ratio; a calculating unit that calculates maximum and minimum parallaxes for the image data of the enlarged or reduced image size; and an output unit that outputs the maximum and minimum parallaxes updated to the calculation results, together with the image data subjected to the enlargement or reduction.

An image processingmethod according to the fourth aspect of the present invention includes the steps of: obtaining image data of a 3D image, and content data containing the maximum and minimum parallaxes for the image size corresponding to the image data of the 3D image; enlarging or reducing the image size corresponding to the obtained image data of the 3D image at a predetermined enlargement or reduction ratio; calculating the maximum and minimum parallaxes for the image data of the enlarged or reduced image size; and outputting the maximum and minimum parallaxes updated to the calculation results, together with the image data subjected to the enlargement or reduction.

A program according to the fourth aspect of the present invention causes a computer to perform an operation including the steps of: obtaining image data of a 3D image, and content data containing the maximum and minimum parallaxes for the image size corresponding to the image data of the 3D image; enlarging or reducing the image size corresponding to the obtained image data of the 3D image at a predetermined enlargement or reduction ratio; calculating the maximum and minimumparallaxes for the image data of the enlarged or reduced image size; and outputting the maximum and minimum parallaxes updated to the calculation results, together with the image data subjected to the enlargement or reduction.

In the fourth aspect of the present invention, image data of a 3D image, and content data containing the maximum and minimum parallaxes for the image size corresponding to the image data of the 3D image are obtained. The image size corresponding to the obtained image data of the 3D image is then enlarged or reduced at a predetermined enlargement or reduction ratio. The maximum and minimum parallaxes for the image data of the enlarged or reduced image size are calculated. The maximum and minimum parallaxes updated to the calculation results, together with the image data subjected to the enlargement or reduction, are then output.

Each of the above programs to be provided may be transmitted via a transmission medium, or may be recorded on a recording medium.

Each of the above image processing apparatuses may be an independent apparatus, or may be an internal block of an apparatus.

EFFECTS OF THE INVENTION

According to the first through fourth aspects of the present invention, video data of 3D content can be appropriately processed.

BRIEF DESCRIPTION OF DRAWINGS

Fig. 1 is a block diagram showing an example structure of an embodiment of a recording apparatus to which the present invention is applied.
Fig. 2 is a flowchart for explaining a recording operation performed by the recording apparatus of Fig. 1.
Fig. 3 is a diagram showing the hierarchical structure of data recorded on a recording medium.
Fig. 4 is a diagram showing an example of an extended region of a MPEG4 box.
Fig. 5 is a diagram showing another example of an extended region of a MPEG4 box.
Fig. 6 is a diagram showing yet another example of an extended region of a MPEG4 box.
Fig. 7 is a block diagram showing an example structure of an embodiment of a reproducing apparatus to which the present invention is applied.
Fig. 8 is a block diagram showing an example structure of the 3D image processing unit in detail.
Fig. 9 is a flowchart for explaining a reproducing operation performed by the reproducing apparatus of Fig. 7.
Fig. 10 is a block diagram showing an example structure of an embodiment of a data conversion apparatus to which the present invention is applied.
Fig. 11 is a block diagram showing an example structure of an embodiment of a computer to which the present invention is applied.

MODE FOR CARRYING OUT THE INVENTION

<Embodiment to Which the Invention is Applied>

[Example Structure of Recording Apparatus]

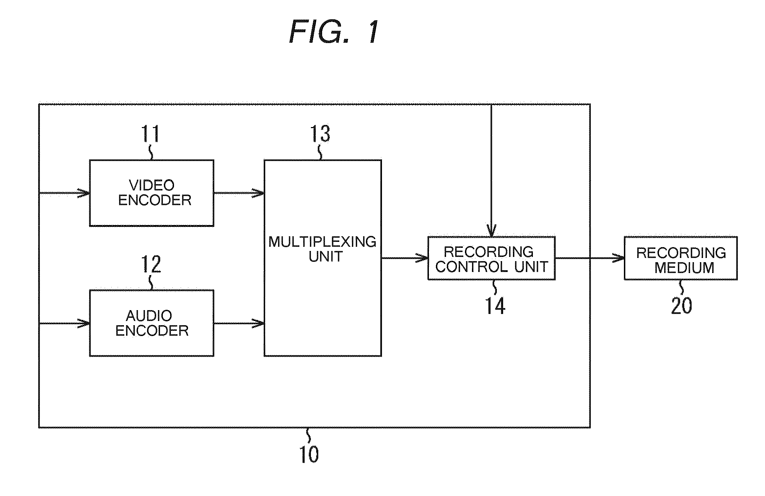

Fig. 1 is a block diagram of an example structure of an embodiment of a recording apparatus to which the present invention is applied.
The recording apparatus 10 of Fig. 1 includes a video encoder 11, an audio encoder 12, a multiplexing unit 13, and a recording control unit 14.
The recording apparatus 10 encodes content data of 3D content, and records the encoded data on a recording medium 20 such as a BDROM (Blu-Ray (a registered trade name) Disc Read Only Memory). The content data contains image data of 3D images (hereinafter referred to as 3D video data) and audio data corresponding to the image data. The 3D video data is formed with image data of images for the left eye and image data of images for the right eye. The content data also contains additional information that is the information about parallaxes set in the images for the left eye and the images for the right eye.
The video encoder 11 of the recording apparatus 10 encodes 3D video data input from the outside by an encoding method such as MPEG2 (Moving Picture Experts Group phase 2), MPEG4, or AVC (Advanced Video Coding). The video encoder 11 supplies a video stream that is the ES (Elementary Stream) obtained as the result of the encoding, to the multiplexing unit 13.
The audio encoder 12 encodes the audio data corresponding to the 3D video data input from the outside by an encoding method such as MPEG. The audio encoder 12 then supplies an audio stream that is the ES obtained as the result of the encoding to the multiplexing unit 13.
The multiplexing unit 13 multiplexes the video stream supplied from the video encoder 11 and the audio stream supplied from the audio encoder 12, and supplies the multiplexed stream obtained as the result of the multiplexing to the recording control unit 14.
The recording control unit 14 records the multiplexed stream supplied from the multiplexing unit 13 on the recording medium 20. The recording control unit 14 also records a definition file on the recording medium 20. The definition file contains a predetermined image size to be a reference for 3D images to be recorded on the recording medium 20 (hereinafter referred to as the reference image size), and the maximum parallax value (the maximum parallax) and the minimum parallax value (the minimum parallax) of an image having the above image size. In the following, the maximum parallax value (the maximum parallax) and the minimum parallax value (the minimum parallax) will also be referred as the maximum/minimum parallaxes.
Here, the image size of 3D video data to be recorded on the recording medium 20 and the reference image size are substantially the same, but may not be exactly the same. That is, the maximum/minimum parallaxes in the additional information are the maximum parallax value and the minimum parallax value of an image having the reference image size. Therefore, when the image size of 3D video data to be recorded on the recording medium 20 is not the same as the reference image size, the maximum/minimum parallaxes of the 3D video data differs from the maximum/minimum parallaxes recorded as the definition file.

In a case where a reference image size of "720 x 480," a maximum parallax of "+72," and a minimum parallax of "-48," are recorded as the definition file, for example, the maximum parallax and the minimum parallax are "+72" and "-48," respectively, when the reference image size is "720 x 480." In this case, the image size of the 3D video data to be recorded on the recording medium 20 may be "1920 x 1080."

The maximum/minimum parallaxes and the reference image size are input from an operation input unit (not shown), and are supplied to the recording control unit 14.

In the recording apparatus 10 having the above described structure, the "reference image size and maximum/minimum parallaxes" are recorded as additional information (metadata) on the recording medium 20, and, accordingly, properprocessing using the "maximum/minimum parallaxes" can be performed at the time of reproduction.

[Description of Operation of the Recording Apparatus]

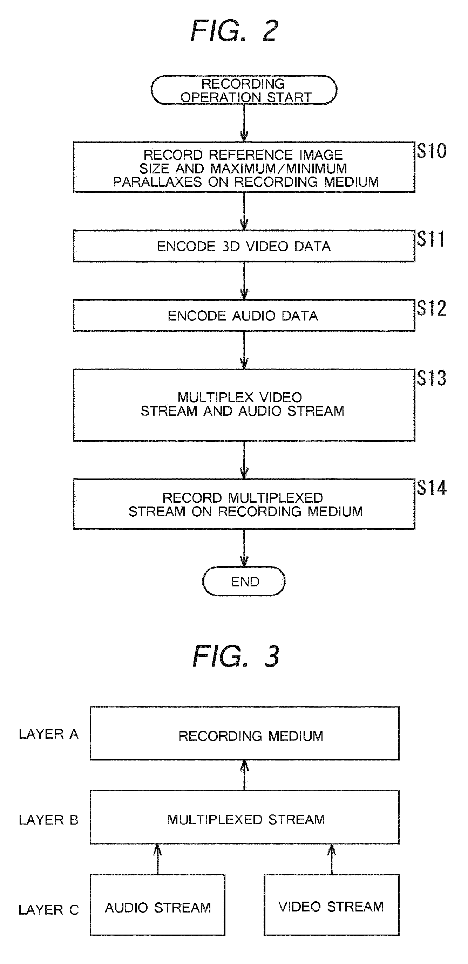

Fig. 2 is a flowchart for explaining a recording operation to be performed by the recording apparatus 10 of Fig. 1. This recording operation is started when additional information, 3D video data, and audio data are input, for example.

In step S10, the recording control unit 14 records the "reference image size and maximum/minimum parallaxes" that are the additional information input from the outside are recorded as the definition file on the recording medium 20.

In step S11, the video encoder 11 encodes the 3D video data input from the outside by an encoding method such as MPEG2, MPEG4, or AVC. The video encoder 11 then supplies the video stream obtained as the result of the encoding to the multiplexing unit 13.

In step S12, the audio encoder 12 encodes the audio data corresponding to the 3D video data input from the outside by an encoding method such as MPEG, and supplies the audio stream obtained as the result of the encoding to the multiplexing unit 13.

In step S13, the multiplexing unit 13 multiplexes the video stream from the video encoder 11 and the audio stream from the audio encoder 12, and supplies the multiplexed stream obtained as the result of the multiplexing to the recording control unit 14.

In step S14, the recording control unit 14 records the multiplexed stream supplied from the multiplexing unit 13 on the recording medium 20, and ends the operation.

[Data Structure of Additional Information]

Fig. 3 is a diagram showing the hierarchical structure of data to be recorded on the recording medium 20.

As shown in Fig. 3, the hierarchy of data to be recorded on the recording medium 20 is formed with a layer C of ESs such as the audio stream and the video stream, a layer B as the system layer of the multiplexed stream, a layer A of information unique to the recording medium 20, and the like.

In the above described example, the "reference image size and maximum/minimum parallaxes" as the additional information are recorded as the definition file unique to the recording medium 20, or are recorded in the layer A. However, the "reference image size and maximum/minimum parallaxes" can be recorded in the layer B or the layer C.

In a case where the additional information is recorded in the layer C, for example, the additional information is recorded as SEI (Supplemental Enhancement Information), or part of a SPS (Sequence Parameter Set) or a PPS (Picture Parameter Set), if the encoding method is AVC. If the encoding method is MPEG2, the additional information is recorded as a video sequence or extension_and_user_data.

In this case, the additional information can be made variable in one video stream. The "reference image size and maximum/minimum parallaxes" can be changed for each video stream.

In a case where the additional information is recorded in the layer B, the additional information is recorded in a private packet of a TS (Transport Stream), a private pack of a PS (Program Stream), an extended region of a box contained in MPEG4 configuration (Config) information, or the like.

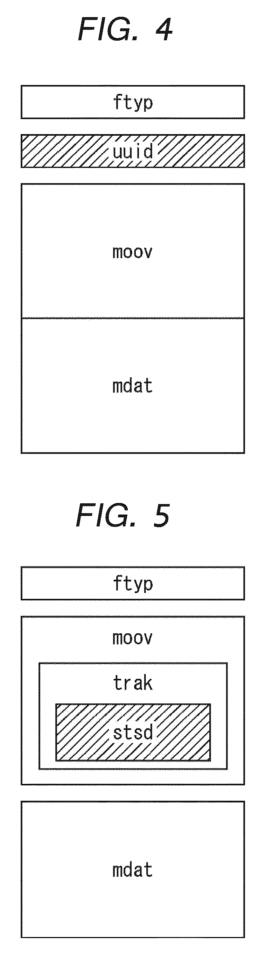

The extended region of the MPEG4 box in which the additional information is recorded is located in the Private Extension box (uuid in Fig. 4) immediately behind the ftyp box located at the top of the file as shown in Fig. 4, for example. In this case, the reproducing apparatus that reproduces the 3D video data recorded on the recording medium 20 can obtain the "reference image size and maximum/minimum parallaxes" prior to a decoding operation. The "reference image size and maximum/minimum parallaxes" are invariable in the file.

Other than the "reference image size andmaximum/minimum parallaxes," information indicating the type of codec, the bit rate, the frame size, the aspect ratio, and whether the images are 2D images or 3D images is written in the Private Extension box.

The extension region of the MPEG4 box in which the additional information is recorded may be provided in a region (stsd in Fig. 5) in track information (trak) in a moov box, as shown in Fig. 5. In this case, the video stream contains information indicating the region of the additional information to be referred to, and, based on the information, the reproducing apparatus obtains the "reference image size and maximum/minimum parallaxes." Accordingly, the "reference image size and maximum/minimum parallaxes" can be changed in the video stream. However, the accessibility is poorer than in the case of Fig. 4.

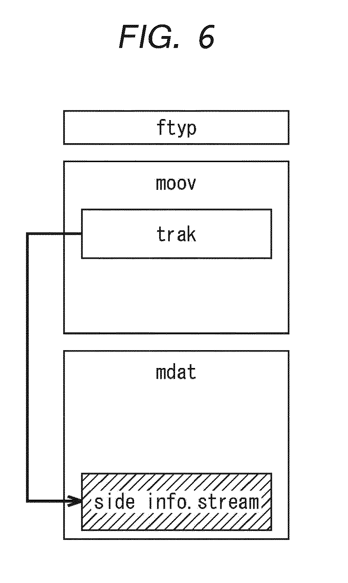

Further, the extended region of the MPEG4 box in which the additional information is recorded may be provided in a mdat box, as shown in Fig. 6. That is, the additional information may be recorded as a media stream (side info.stream). In this case, the video stream and the additional information are in synchronization with each other through time information. Accordingly, the "reference image size and maximum/minimum parallaxes" can be changed by the second.

In the examples illustrated in Figs. 4 through 6, the moov box and the mdat box are located in order behind the ftyp box, but the positions of the moov box and the mdat box are not limited to them.

<Embodiment of Reproducing Apparatus to Which the Invention is Applied>

[Example Structure of Reproducing Apparatus]

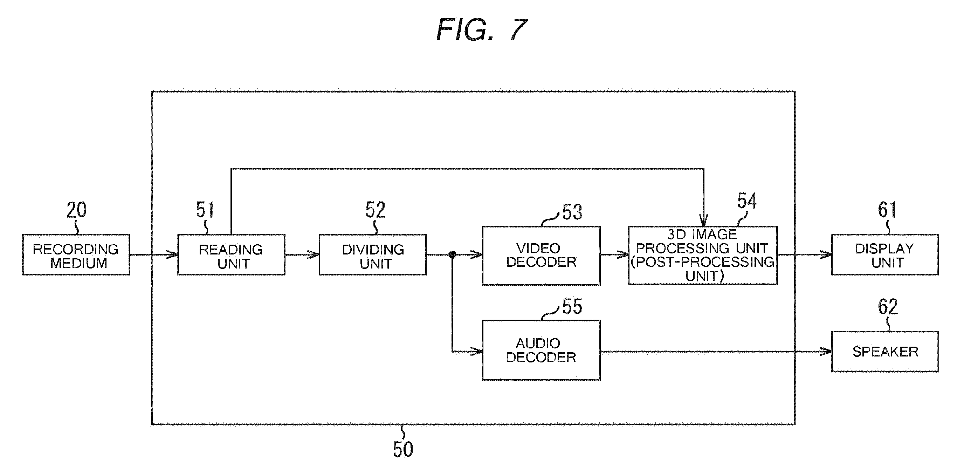

Fig. 7 is a block diagram showing an example structure of an embodiment of a reproducing apparatus to which the present invention is applied.

The reproducing apparatus 50 of Fig. 7 includes a reading unit 51, a dividing unit 52, a video decoder 53, a 3D image processing unit 54, and an audio decoder 55. The reproducing apparatus 50 reproduces 3D video data recorded on a recording medium 20 and the audio data corresponding to the 3D video data, as well as additional information. Based on the additional information, the reproducing apparatus 50 properly displays 3D images.

Specifically, the reading unit 51 of the reproducing apparatus 50 reads the additional information containing the "reference image size and maximum/minimum parallaxes" recorded on the recording medium 20, and supplies the additional information to the 3D image processing unit 54. The reading unit 51 reads a multiplexed stream recorded on the recording medium 20, and supplies the multiplexed stream to the dividing unit 52.

The dividing unit 52 divides the multiplexed stream supplied from the reading unit 51 into a video stream and an audio stream. The dividing unit 52 then supplies the video stream to the video decoder 53, and supplies the audio stream to the audio decoder 55.

The video decoder 53 decodes the video stream supplied from the dividing unit 52 by the method corresponding to the encoding method used by the video encoder 11 of Fig. 1, and supplies the 3D video data obtained as the result of the decoding to the 3D image processing unit 54.

The 3D image processing unit 54 performs predetermined image processing on the 3D video data supplied from the video decoder 53, where necessary. In this embodiment, the 3D image processing unit 54 performs processing to adjust the depth positions of captions to be displayed and superimposed on 3D images. The 3D image processing unit 54 outputs the processed 3D video data to a display unit 61.

The image area in which the captions are to be displayed may be supplied from the outside, or may be independently detected in the 3D image processing unit 54. To detect a caption display area, the processing disclosed in JP 2008-166988 A (an operation to detect an area that does not vary over a predetermined period of time as a caption area), which was suggested by the applicant, can be used, for example.

The audio decoder 55 decodes the audio stream supplied from the dividing unit 52 by the method corresponding to the encoding method used by the audio encoder 12 of Fig. 1, and supplies the audio data obtained as the result of the decoding to a speaker 62.

The displayunit 61 displays, in a time-divisional manner, for example, the images for the left eye and the images for the right eye corresponding to the video data supplied from the 3D image processing unit 54. At this point, the viewer wears glasses with a shutter that is synchronized with the switching between the images for the left eye and the images for the right eye, to see the images for the left eye only with the left eye, and see the images for the right eye only with the right eye. By doing so, the viewer can see the 3D images in three dimensions.

The speaker 62 outputs sound corresponding to the audio data supplied from the audio decoder 55.

[Details of an Example Structure of the 3D Image Processing Unit 54]

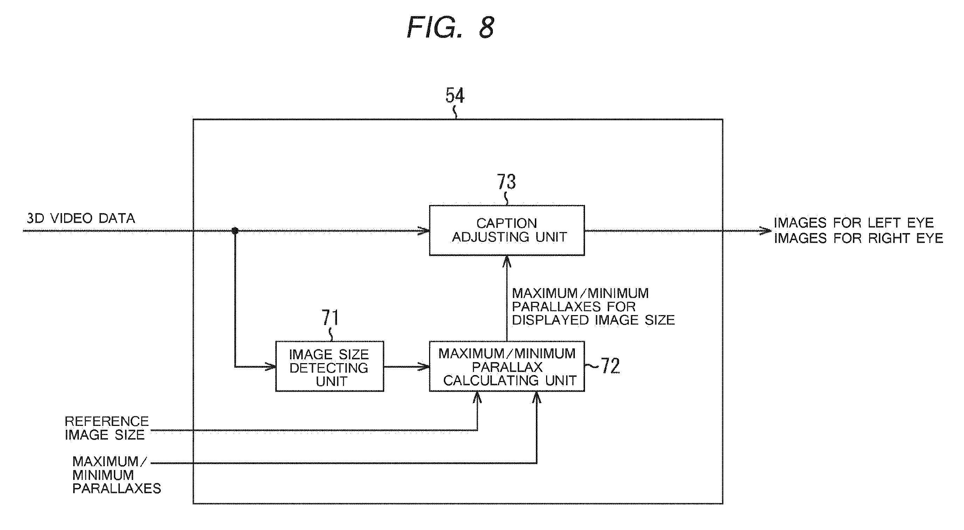

Fig. 8 is a block diagram showing an example structure of the 3D image processing unit 54 of Fig. 7 in detail.

The 3D image processing unit 54 includes an image size detecting unit 71, a maximum/minimum parallax calculating unit 72, and a caption adjusting unit 73.

The image size detecting unit 71 detects the image size from the 3D video data supplied from the reading unit 51. The image size detected here is the image size to be displayed on the display unit 61, and therefore, will be hereinafter referred to as the displayed image size. The displayed image size can be recognized by counting signals representing the validity period of the images, for example. The image size detecting unit 71 supplies the displayed image size as the detection result to the maximum/minimum parallax calculating unit 72.

The maximum/minimum parallax calculating unit 72 obtains the "reference image size and maximum/minimum parallaxes" supplied from the reading unit 51, and obtains the displayed image size supplied from the image size detecting unit 71.

The maximum/minimum parallax calculating unit 72 compares the supplied displayed image size with the "reference image size" in the additional information. If the displayed image size and the reference image size are different sizes, the maximum/minimum parallaxes for the displayed image size are calculated.

In a case where the "reference image size, maximum parallax, and minimum parallax" are "720 x 480, +72, and -48, " respectively, and the "displayed image size" is "1920 x 1080," for example, the maximum/minimum parallax calculating unit 72 calculates the maximum/minimumparallaxes for the displayed image size in the following manner.

$$\text{The maximum parallax} = +72 \times (1920/720) = +192$$

$$\text{The minimum parallax} = -48 \times (1920/720) = -128$$

The maximum/minimum parallax calculating unit 72 then supplies the maximum/minimum parallaxes for the displayed image size as the calculation result to the caption adjusting unit 73. In a case where the displayed image size and the reference image size are the same, the "maximum/minimum parallaxes" in the obtained additional information is supplied directly as the maximum/minimum parallaxes for the displayed image size to the caption adjusting unit 73.

The caption adjusting unit 73 adjusts the depth positions of the captions to be displayed and superimposed on the 3D images, in accordance with the maximum/minimum parallaxes for the displayed image size. That is, the caption adjusting unit 73 adjusts the captions to be located slightly forward from the depth position determined by the maximum parallax for the displayed image size (or to be the closest to the viewer).

[Description of Operation of the Reproducing Apparatus]

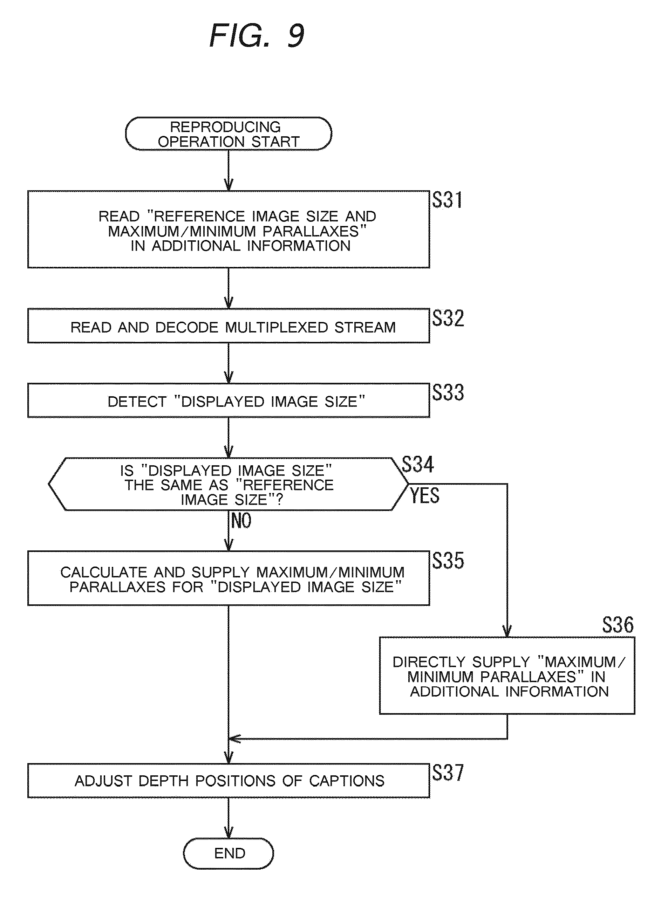

Fig. 9 is a flowchart for explaining a reproducing operation to be performed by the reproducing apparatus 50. This reproducing operation is started when a viewer requests reproduction of 3D content recorded on the recording medium 20, for example.

In step S31, the reading unit 51 reads the "reference image size and maximum/minimum parallaxes" recorded as the additional information on the recording medium 20, and supplies the "reference image size and maximum/minimum parallaxes" to the 3D image processing unit 54.

In step S32, the reproducing apparatus 50 reads and decodes the multiplexed stream of the 3D content recorded on the recording medium 20. That is, the reading unit 51 reads the multiplexed stream of the 3D content from the recording medium 20, and supplies the multiplexed stream to the dividing unit 52. The dividing unit 52 divides the multiplexed stream into a video stream and an audio stream. The video decoder 53 decodes the video stream by the method corresponding to the encoding method used by the recording apparatus 10, and supplies the 3D video data obtained as the result of the decoding to the 3D image processing unit 54. The audio decoder 55 decodes the audio stream by the method corresponding to the encoding method used by the recording apparatus 10, and supplies the audio data obtained as the result of the decoding to the speaker 62.

In step S33, the image size detecting unit 71 detects the image size (the displayed image size) from the 3D video data supplied from the reading unit 51, and supplies the image size to the maximum/minimum parallax calculating unit 72. In step S34, the maximum/minimum parallax calculating unit 72 determines whether the "displayed image size" detected by the image size detecting unit 71 and the "reference image size" supplied from the reading unit 51 are the same.

If the "displayed image size" and the "reference image size" are determined not to be the same in step S34, the operation moves on to step S35. The maximum/minimum parallax calculating unit 72 then calculates the maximum/ minimum parallaxes for the displayed image size, and supplies the maximum/minimum parallaxes to the caption adjusting unit 73.

If the "displayed image size" and the "reference image size" are determined to be the same in step S34, on the other hand, the operation moves on to step S36. In step S36, the maximum/minimum parallax calculating unit 72 supplies the "reference image size" in the additional information supplied from the reading unit 51 directly as the maximum/ minimum parallaxes for the displayed image size to the caption adjusting unit 73.

In step S37, the caption adjusting unit 73 adjusts the depth positions of the captions to be displayed and superimposed on the 3D images, in accordance with the maximum/minimum parallaxes for the displayed image size. The adjusted 3D video data is output to the display unit 61. In step S37, the audio decoder 55 also outputs the audio data corresponding to the 3D video data. The operation then comes to an end.

As described above, in addition to the multiplexed stream of 3D content, the "reference image size and maximum/minimum parallaxes" of the 3D content is recorded as the additional information on the recording medium 20. The reproducing apparatus 50 reads the additional information, and compares the additional information with the image size of the 3D video data obtained by decoding, to readily recognize the precise maximum/minimum parallaxes of the read 3D video data. Based on the precise maximum/minimum parallaxes of the 3D video data, predetermined signal processing can be properly performed.

In this embodiment, the depth positions of captions are adjusted in the predetermined signal processing. However, the processing based on the maximum/minimum parallaxes is not limited to that.

In the above described example, the multiplexed stream and additional information (metadata) of 3D content are provided from the content provider side to the content viewer side via the recording medium 20. However, there are cases where 3D content is provided by transmission via a network such as a satellite broadcasting network, a cable television network, or the Internet. Also, there is a possibility that the image size of 3D content transmitted from the content provider side is enlarged or reduced in the transmission path before the content viewer receives the 3D content. In that case, the image size of the transmitted 3D video data differs from the "reference image size" transmitted as the additional information. Even in such a case, the maximum/minimum parallaxes for the image size of the received 3D video data can be promptly and precisely recognized from the "reference image size and maximum/minimum parallaxes" in the additional information, and image processing based on the precise maximum/minimum parallaxes can be properly performed.

<Other Embodiments>

In the above described example, the "reference image size and maximum/minimum parallaxes" to be recorded or transmitted as the additional information is fixed even in a case where the image size of 3D content is enlarged or reduced. However, the "maximum/minimum parallaxes" in the additional information may be updated as the image size is enlarged or reduced. In such a case, the "reference image size" is always the same as the image size of 3D video data to be recorded or transmitted, and therefore, can be omitted.

[Example Structure of Data Conversion Apparatus]

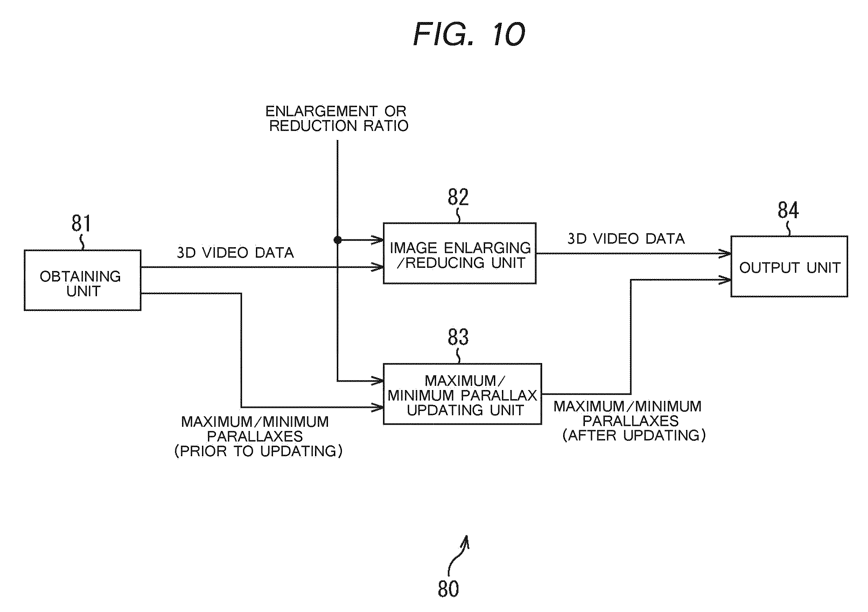

Fig. 10 is a functional block diagram of a data conversion apparatus (an image processing apparatus) that converts the image size of 3D video data, and updates the information about the maximum/minimum parallaxes. In Fig. 10, explanation of audio data will be omitted.

The data conversion apparatus 80 of Fig. 10 includes an obtaining unit 81, an image enlarging/reducing unit 82, a maximum/minimum parallax updating unit 83, and an output unit 84.

The obtaining unit 81 obtains 3D video data input from the outside and the "maximum/minimum parallaxes" as the additional information. The obtaining unit 81 supplies the 3D video data to the image enlarging/reducing unit 82, and supplies the "maximum/minimum parallaxes" to the maximum/minimum parallax updating unit 83.

The image enlarging/reducing unit 82 performs processing to enlarge or reduce the image size of the supplied 3D video data at an enlargement or reduction ratio that is input and supplied from an operation input unit or the like (not shown). The image enlarging/reducing unit 82 supplies the processed 3D video data to the output unit 84.

Based on the enlargement or reduction ratio supplied from the operation input unit or the like, the maximum/minimum parallax updating unit 83 updates the "maximum/minimum parallaxes" supplied from the obtaining unit 81 to the "maximum/minimum parallaxes" corresponding to the processed images subjected to the enlarging or reducing operation by the image enlarging/reducing unit 82. The maximum/minimum parallax updating unit 83 then supplies the updated "maximum/minimum parallaxes" to the output unit 84.

The output unit 84 outputs the 3D video data supplied from the image enlarging/reducing unit 82 and the "maximum/minimum parallaxes" as the additional information, in a multiplexing or time-divisional manner or the like.

The enlargement or reduction ratio may not be input through the operation input unit or the like, but may be a predetermined value.

Operations of the data conversion apparatus 80 are now described through a specific example.

First, the obtaining unit 81 obtains 3D video data of an image size of "720 x 480," and additional information in which "+72/-48" is written as the "maximum/minimum parallaxes," for example. The 3D video data obtained by the obtaining unit 81 is supplied to the image enlarging/reducing unit 82, and the additional information is supplied to the maximum/minimum parallax updating unit 83.

The enlargement or reduction ratio that is input to the operation input unit or the like by a predetermined user is supplied to the image enlarging/reducing unit 82. Here, "1920/720" is supplied, for example.

Based on the supplied enlargement or reduction ratio, the image enlarging/reducing unit 82 performs processing to enlarge the image size of the 3D video data from "720 x 480" to "1920 x 1080," and supplies the processed 3D video data to the output unit 84.

The maximum/reduction parallax updating unit 83 updates the "maximum/minimum parallaxes" in the additional information at the enlargement or reduction ratio supplied from the operation input unit or the like, or at "1920/720." Specifically, the maximum/reduction parallax updating unit 83 performs the following calculations:

$$\text{The maximum parallax} = +72 \times (1920/720) = +192$$

$$\text{The minimum parallax} = -48 \times (1920/720) = -128$$

In this manner, "+192/-128" is obtained as the updated "maximum/minimum parallaxes." The maximum/reduction parallax updating unit 83 then supplies the updated "maximum/minimum parallaxes" = "+192/-128" to the output unit 84.

The processing by the image enlarging/reducing unit 82 and the processing by the maximum/reduction parallax updating unit 83 can be performed in parallel.

The output unit 84 outputs the 3D video data that is supplied from the image enlarging/reducing unit 82 and has the image size of "1920 x 1080," and the additional information in which "+192/-128" is written as the "maximum/minimum parallaxes."

This data conversion apparatus 80 may be located in a stage before the output unit of the content provider side, in the middle of a transmission path, or in a stage after the input unit of the content obtaining side.

[Description of Computer to Which the Invention is Applied]

The above described series of operations can be performed by either hardware or software. In a case where the series of operations are performed by software, the program forming the software is installed in a general-purpose computer or the like.

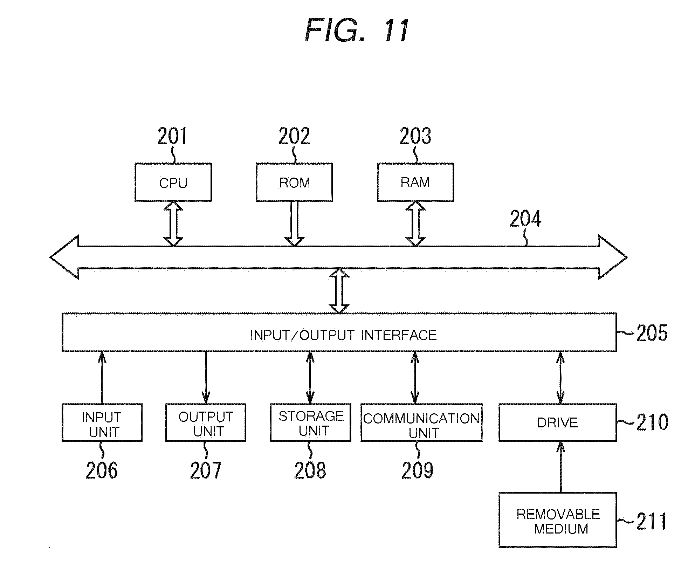

Fig. 11 shows an example structure of an embodiment of a computer in which the program for performing the above described series of operations is installed.

The program can be recorded beforehand in a storage unit 208 as a recording medium provided in the computer, or in a ROM (Read Only Memory) 202.

Alternatively, the program can be stored (recorded) in a removable medium 211. This removable medium 211 can be provided as so-called packaged software. Here, the removable medium 211 may be a CD-ROM (Compact Disc Read Only Memory), a MO (Magneto Optical) disc, a DVD (Digital Versatile Disc), a magnetic disc, a semiconductor memory, or the like.

The program is installed from the above described removable medium 211 into the computer via a drive 210. Alternatively, the program can be downloaded into the computer via a communication network or a broadcasting network, and be installed into the built-in storage unit 208. That is, the program can be received by a communication unit 209 via a wired or wireless transmission medium, and be installed into the storage unit 208.

The computer includes a CPU (Central Processing Unit) 201, and an input/output interface 205 is connected to the CPU 201 via a bus 204.

When a user inputs an instruction by operating an input unit 206 or the like via the input/output interface 205, the CPU 201 executes the program stored in the ROM 202 in accordance with the instruction. Alternatively, the CPU 201 loads the program stored in the storage unit 208 into a RAM (Random Access Memory) 203, and executes the program.

In this manner, the CPU 201 performs the operations according to the above described flowcharts, or performs operations with the structures illustrated in the above described block diagrams. Where necessary, the CPU 201 then outputs the operation results from an output unit 207, or transmits the operation results from the communication unit 209, or further records the operation results into the storage unit 208, via the input/output interface 205, for example.

The input unit 206 is formed with a keyboard, a mouse, a microphone, and the like. The output unit 207 is formed with a LCD (Liquid Crystal Display), a speaker, and the like.

In this specification, the operations to be performed by the computer according to the program are not necessarily performed in chronological order according to the sequences shown in the flowcharts. That is, the operations to be performed by the computer according to the program include operations to be performed in parallel or independently of one another (such as parallel processing or object-based processing).

The program may be executed by a single computer (processor), or maybe executed through distributedprocessing by more than one computer. Further, the program may be transferred to a remote computer, and be executed therein.

In the above described embodiments, each 3D image is a two-viewpoint 3D image with two viewpoints. However, those embodiments can also be applied to multi-viewpoint 3D images with three or more viewpoints.

Embodiments of the present invention are not limited to the above described embodiments, and various changes may be made to them without departing from the scope of the invention.

REFERENCE SIGNS LIST

| 20 | Recording medium |
| 50 | Reproducing apparatus |
| 51 | Reading unit |
| 54 | 3D image processing unit |
| 71 | Image size detecting unit |
| 72 | Maximum/minimum parallax calculating unit |
| 73 | Caption adjusting unit |
| 80 | Data conversion apparatus |
| 81 | Obtaining unit |
| 82 | Image enlarging/reducing unit |
| 83 | Maximum/minimum parallax updating unit |
| 84 | Output unit |

**Claims**

1. A data structure comprising:

   image data of a 3D image; and
   a reference image size that is a predetermined image size to be a reference for the 3D image, and maximum and minimum parallaxes for the reference image size.

2. An image processing apparatus comprising:

   an obtaining unit that obtains image data of a 3D image, and content data containing a reference image size that is a predetermined image size to be a reference for the 3D image and maximum and minimum parallaxes for the reference image size;
   a detectingunit that detects an image size corresponding to the image data of the 3D image obtained by the obtaining unit;
   a parallax calculating unit that calculates maximum and minimum parallaxes corresponding to the image size of the obtained image data, when the detected image size of the image data is not the same as the reference image size; and
   a processing unit that performs predetermined image processing on the image data obtained by the obtaining unit, based on the calculated maximum and minimum parallaxes.

3. The image processing apparatus according to claim 2, wherein the parallax calculating unit calculates the maximum and minimum parallaxes corresponding to the image size of the image data by multiplying the maximum and minimum parallaxes for the obtained reference image size by a ratio between the detected image size of the image data and the reference image size.

4. An image processing method comprising the steps of:

   obtaining image data of a 3D image, and content data containing a reference image size that is a predetermined image size to be a reference for the 3D image and maximum and minimum parallaxes for the reference image size;
   detecting an image size corresponding to the obtained image data of the 3D image;
   calculating maximum and minimum parallaxes corresponding to the image size of the obtained image data, when the detected image size of the image data is not the same as the reference image size; and

performing predetermined image processing on the obtained image data, based on the calculated maximum and minimum parallaxes.

5. A program for causing a computer to perform an operation comprising the steps of:

obtaining image data of a 3D image, and content data containing a reference image size that is a predetermined image size to be a reference for the 3D image and maximum and minimum parallaxes for the reference image size;
detecting an image size corresponding to the obtained image data of the 3D image;
calculating maximum and minimum parallaxes corresponding to the image size of the obtained image data, when the detected image size of the image data is not the same as the reference image size; and
performing predetermined image processing on the obtained image data, based on the calculated maximum and minimum parallaxes.

6. A data structure comprising:

image data of a 3D image; and
maximum and minimum parallaxes for an image size corresponding to the image data of the 3D image.

7. An image processing apparatus comprising:

an obtaining unit that obtains image data of a 3D image, and content data containing maximum and minimum parallaxes for an image size corresponding to the image data of the 3D image;
an enlarging/reducing unit that enlarges or reduces the image size corresponding to image data of the 3D image obtained by the obtaining unit, the image size being enlarged or reduced at a predetermined enlargement or reduction ratio;
a calculating unit that calculates maximum and minimum parallaxes for the image data of the enlarged or reduced image size; and
an output unit that outputs the maximum and minimum parallaxes updated to the calculation results, together with the image data subjected to the enlargement or reduction.

8. An image processing method comprising the steps of:

obtaining image data of a 3D image, and content data containing maximum and minimum parallaxes for an image size corresponding to the image data of the 3D image;
enlarging or reducing the image size corresponding to the obtained image data of the 3D image at a predetermined enlargement or reduction ratio;
calculating maximum and minimum parallaxes for the image data of the enlarged or reduced image size; and
outputting the maximum and minimum parallaxes updated to the calculation results, together with the image data subjected to the enlargement or reduction.

9. A program for causing a computer to perform an operation comprising the steps of:

obtaining image data of a 3D image, and content data containing maximum and minimum parallaxes for an image size corresponding to the image data of the 3D image;
enlarging or reducing the image size corresponding to the obtained image data of the 3D image at a predetermined enlargement or reduction ratio;
calculating maximum and minimum parallaxes for the image data of the enlarged or reduced image size; and
outputting the maximum and minimum parallaxes updated to the calculation results, together with the image data subjected to the enlargement or reduction.

*FIG. 1*

## FIG. 2

```
           ┌──────────────────────┐
           │      RECORDING       │
           │  OPERATION START     │
           └──────────┬───────────┘
                      ▼
    ┌──────────────────────────────────┐
    │     RECORD REFERENCE IMAGE       │ S10
    │    SIZE AND MAXIMUM/MINIMUM       │
    │  PARALLAXES ON RECORDING MEDIUM   │
    └──────────────┬───────────────────┘
                   ▼
    ┌──────────────────────────────────┐
    │     ENCODE 3D VIDEO DATA          │ S11
    └──────────────┬───────────────────┘
                   ▼
    ┌──────────────────────────────────┐
    │       ENCODE AUDIO DATA           │ S12
    └──────────────┬───────────────────┘
                   ▼
    ┌──────────────────────────────────┐
    │        MULTIPLEX VIDEO            │ S13
    │   STREAM AND AUDIO STREAM         │
    └──────────────┬───────────────────┘
                   ▼
    ┌──────────────────────────────────┐
    │      RECORD MULTIPLEXED           │ S14
    │  STREAM ON RECORDING MEDIUM       │
    └──────────────┬───────────────────┘
                   ▼
            ┌──────────┐
            │   END    │
            └──────────┘
```

## FIG. 3

```
LAYER A   ┌────────────────────────────────────────┐
          │          RECORDING MEDIUM              │
          └────────────────────┬───────────────────┘
                               ▲
LAYER B   ┌────────────────────────────────────────┐
          │          MULTIPLEXED STREAM            │
          └──────────┬──────────────────┬──────────┘
                     ▲                  ▲
LAYER C   ┌────────────────┐   ┌────────────────┐
          │  AUDIO STREAM  │   │  VIDEO STREAM  │
          └────────────────┘   └────────────────┘
```

## FIG. 4

| ftyp |
| --- |

| uuid |
| --- |

| moov |
| --- |
| mdat |

## FIG. 5

| ftyp |
| --- |

| moov |
| --- |
| trak |
| stsd |

| mdat |
| --- |

# FIG. 6

| ftyp |
|---|

| moov |
|---|
| trak |

| mdat |
|---|
| side info.stream |

*FIG. 7*

## FIG. 8

# FIG. 9

```
          ╭─────────────────────╮
          │     REPRODUCING      │
          │   OPERATION START    │
          ╰─────────────────────╯
                     │
                     ▼
   ┌────────────────────────────────────────┐
   │   READ "REFERENCE IMAGE SIZE AND        │ S31
   │   MAXIMUM/MINIMUM PARALLAXES"           │
   │   IN ADDITIONAL INFORMATION             │
   └────────────────────────────────────────┘
                     │
                     ▼
   ┌────────────────────────────────────────┐
   │   READ AND DECODE MULTIPLEXED STREAM    │ S32
   └────────────────────────────────────────┘
                     │
                     ▼
   ┌────────────────────────────────────────┐
   │   DETECT "DISPLAYED IMAGE SIZE"         │ S33
   └────────────────────────────────────────┘
                     │
                     ▼
      ╱─────────────────────────────────╲
     ╱    IS "DISPLAYED IMAGE SIZE"       ╲  S34
    ╱      THE SAME AS "REFERENCE          ╲
    ╲         IMAGE SIZE"?                 ╱  YES ───┐
     ╲─────────────────────────────────╱           │
                     │ NO                           │
                     ▼                              │
   ┌────────────────────────────────────────┐       │
   │  CALCULATE AND SUPPLY MAXIMUM/MINIMUM   │ S35   │
   │  PARALLAXES FOR "DISPLAYED IMAGE SIZE"  │       │
   └────────────────────────────────────────┘       │
                     │                         S36   ▼
                     │        ┌────────────────────────────────┐
                     │        │  DIRECTLY SUPPLY "MAXIMUM/      │
                     │        │  MINIMUM PARALLAXES" IN         │
                     │        │  ADDITIONAL INFORMATION         │
                     │        └────────────────────────────────┘
                     │                         │
                     ▼◄────────────────────────┘
   ┌────────────────────────────────────────┐
   │  ADJUST DEPTH POSITIONS OF CAPTIONS     │ S37
   └────────────────────────────────────────┘
                     │
                     ▼
              ╭─────────────╮
              │     END     │
              ╰─────────────╯
```

# FIG. 10

ENLARGEMENT OR
REDUCTION RATIO

81

OBTAINING
UNIT

3D VIDEO DATA

82

IMAGE ENLARGING
/REDUCING UNIT

3D VIDEO DATA

84

OUTPUT UNIT

83

MAXIMUM/
MINIMUM PARALLAX
UPDATING UNIT

MAXIMUM/MINIMUM
PARALLAXES
(PRIOR TO UPDATING)

MAXIMUM/MINIMUM
PARALLAXES
(AFTER UPDATING)

80

# FIG. 11

CPU 201  ROM 202  RAM 203

204

INPUT/OUTPUT INTERFACE ~205

INPUT UNIT 206  OUTPUT UNIT 207  STORAGE UNIT 208  COMMUNICATION UNIT 209  DRIVE ~210

REMOVABLE MEDIUM ~211

EP 2 560 399 A1

## INTERNATIONAL SEARCH REPORT

| | International application No. |
|---|---|
| | PCT/JP2011/058705 |

**A. CLASSIFICATION OF SUBJECT MATTER**
*H04N13/04(2006.01)i*

According to International Patent Classification (IPC) or to both national classification and IPC

**B. FIELDS SEARCHED**

Minimum documentation searched (classification system followed by classification symbols)
H04N13/04

Documentation searched other than minimum documentation to the extent that such documents are included in the fields searched
Jitsuyo Shinan Koho        1922–1996   Jitsuyo Shinan Toroku Koho   1996–2011
Kokai Jitsuyo Shinan Koho  1971–2011   Toroku Jitsuyo Shinan Koho   1994–2011

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2004-7396 A (Sanyo Electric Co., Ltd.), 08 January 2004 (08.01.2004), paragraphs [0100] to [0106], [0240] to [0249]; fig. 12, 87, 88 & US 2005/0089212 A1    & EP 1489857 A1 & WO 2003/081921 A1    & CN 1643939 A | 2-5 |
| X | JP 2005-73049 A (Sharp Corp.), 17 March 2005 (17.03.2005), paragraphs [0051] to [0054]; fig. 6 & US 2006/0290778 A1    & EP 1662809 A1 & WO 2005/020591 A1    & KR 10-2006-0087511 A & CN 1864415 A | 7-9 |

☐ Further documents are listed in the continuation of Box C.       ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 June, 2011 (22.06.11) | 05 July, 2011 (05.07.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

## INTERNATIONAL SEARCH REPORT

| International application No. |
|---|
| PCT/JP2011/058705 |

---

**Box No. II     Observations where certain claims were found unsearchable (Continuation of item 2 of first sheet)**

This international search report has not been established in respect of certain claims under Article 17(2)(a) for the following reasons:

1. ☒ Claims Nos.: 1, 6
   because they relate to subject matter not required to be searched by this Authority, namely:
   Claims 1 and 6 relate to the invention concerning "data structure".
   (continued to extra sheet)

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

---

**Box No. III     Observations where unity of invention is lacking (Continuation of item 3 of first sheet)**

This International Searching Authority found multiple inventions in this international application, as follows:

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**       ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

<table>
<tr><td>**INTERNATIONAL SEARCH REPORT**</td><td>International application No.<br>PCT/JP2011/058705</td></tr>
</table>

Continuation of Box No.II-1 of continuation of first sheet(2)

However, the afore-said invention has a feature in only the contents of information, and is therefore relevant to mere presentation of information characterized by the contents thereof. Consequently, the invention relates to a subject matter on which this International Searching Authority is not required to carry out a search under the provisions of PCT Article 17(2)(a)(i) and PCT Rule 39.1.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10327430 A
- JP 2008182669 A
- JP 2008166988 A